# EUROPÄISCHE PATENTANMELDUNG

(11) **EP 2 309 736 A1**
(43) Veröffentlichungstag der Anmeldung: **13.04.2011**
(21) Anmeldenummer: 10177532.8
(22) Anmeldetag: 20.09.2010
(51) Int. Cl.: H04N 5/76, H04N 5/775

(54) **Verfahren zur Speicherung von empfangbaren Audio- und/oder Videodaten sowie ein Gerät oder eine Gerätekombination hierzu**

(30) Priorität: 28.09.2009 DE 102009044118
(71) Anmelder: Loewe Opta GmbH, 96317 Kronach (DE)
(72) Erfinder: Weickert, Bernd, 96224, Burgkunstadt (DE); Maryniok, Wolfgang, 96317, Kronach (DE)
(74) Vertreter: Pröll, Jürgen

(57) **Zusammenfassung**

Die Erfindung betrifft ein Verfahren zur Speicherung von empfangenen Audio- und/oder Videodaten mittels eines Speichergerätes auf einem Datenträger, wobei das Audio-
und/oder Videoempfangsgerät einen digitalen Strom von AV-Daten und zugeordneten Verwaltungsdaten (VD) empfängt und die AV-Daten nicht zu dem gewünschten Programmbeitrag gehörende, blockweise eingefügte unerwünschte Beiträge enthalten, die Restriktionen unterliegen. Um eine ununterbrochene Widergabe eines gewünschten Programmbeitrages zu erreichen, werden die empfangenen AV-Daten nach unerwünschten Beiträgen überprüft und diese in einem Vorspann zu den gewünschten Programmbeiträgen wiedergegeben.

## Beschreibung

Die Erfindung betrifft ein Verfahren zur Speicherung von empfangbaren Audio- und/oder Videodaten mittels eines Speichergerätes auf einem Datenträger mit den im Oberbegriff des Anspruchs 1 angegebenen Markmalen, sowie ein Gerät oder eine Gerätekombination zur Durchführung des Verfahrens.

Aus der CI Plus Specification, V1.2 vom April 2009, herausgegeben von der CI Plus LLP, The Billings, Guildford, Surrey, GU1 4YD, UK, ist bekannt, einem Strom von AV-Daten Verwaltungsdaten zuzuordnen. Die Verwaltungsdaten können Restriktionen bezüglich der Zulässigkeit bzw. Unzulässigkeit von Aufnahme- und Kopiervorgängen, der Zulässigkeit bzw. Unzulässigkeit der weiteren Verteilung und der Aufbewahrungsdauer von aufgezeichneten AV-Daten umfassen. Auch andere Verwaltungsdaten sind vorgesehen bzw. können in die Spezifikationen aufgenommen werden.

Ein Audio- und/oder Videoempfangsgerät, das gemäß der CI Plus Spezifikation ausgelegt ist, berücksichtigt beim Aufzeichnen und beim Verwalten der AV-Daten die Verwaltungsdaten. Beispielsweise wird ein Kopieren unterdrückt, wenn es nicht zugelassen ist. In analoger Weise kann auch ein Aufzeichnungsvorgang unterdrückt werden oder ein aufgezeichneter Strom von AV-Daten bei Ablauf seiner zulässigen Aufbewahrungsdauer automatisch gelöscht werden. Es sind ferner Tendenzen erkennbar, dieses Rechtesystem auch auf den Ton-Rundfunk und derartige Angebote über das Internet sowie auf Aufzeichnungsträger, wie DVD, zu übertragen. Die Erfindung schließt alle diese Systeme ein. Anstelle von AV-Daten können es auch Audio-Datenströme

(A-Daten) sein, denen die Verwaltungsdaten zugeordnet sind.

Sowohl aus der US 2002/0191950 A1 als auch aus der JP 2002-369128 A sind Verfahren bekannt, die ein Überspringen bei der Wiedergabe, bis auf wenige Ausnahmen, unmöglich machen und die entsprechenden Gerätefunktionen deaktivieren, damit beispielsweise Werbesendebeiträge nicht übersprungen werden können, die mit aufgezeichnet sind.

Aus der DE 10 2006 016 491 B4 ist ein Verfahren zum Senden von Werbeblöcken im IP-TV bekannt, bei dem unterschiedliche Präsentationsströme aus einem Programmstrom und mehreren Werbeblöcken durch einen Programmanbieter gebildet werden. Des Weiteren werden mehrere Benutzergruppen, jeweils aus mehreren Benutzern bestehend, erstellt. Die unterschiedlichen Präsentationsströme von Programmanbietern werden über zentrale Verteilungspunkte (z.B. Multicast-Router) an Benutzer übertragen, wobei zu einer bestimmten Benutzergruppe gehörende Benutzer den gleichen Präsentationsstrom erhalten. Die unterschiedlichen Präsentationsströme bestehen aus den gleichen Werbeblöcken und dem gleichen Programmstrom und unterscheiden sich dadurch, dass die Werbeblöcke vom Programmanbieter zu unterschiedlichen Zeiten in den Programmstrom eingefügt werden.

Der Stand der Technik befasst sich überwiegend damit, Werbeblocker vorzusehen, welche bei der Aufzeichnung eines Fernsehprogramms die Werbeblöcke eliminieren. Durch zeitversetztes Betrachten eines in dieser Weise bearbeiteten Fernsehprogrammbeitrages kann damit auch eine laufende Sendung vom Benutzer ohne Werbeblöcke betrachtet werden. Es sind Verfahren bekannt, welche durch die Erkennung übertragungstechnischer und inhaltlicher Merkmale automatisch zwischen Werbeblöcken und Programmblöcken unterscheiden können.

Die Druckschrift EP 1 252 759 B1 beschreibt ein solches Verfahren, das durch die Erkennung inhaltlicher Merkmale zwischen Werbeblöcken und Programmblöcken unterscheiden kann und somit in der Lage ist, die Aufnahme eines Fernsehprogramms zu stoppen, sobald ein Werbeblock beginnt, und die Aufnahme dieses Fernsehprogramms wieder zu starten, sobald der Programmblock wieder beginnt. Die Erkennungsmethode basiert dabei im wesentlichen auf der komplexen Auswertung bestimmter Bildinhalte, wie z.B. des Programmlogos eines Senders, welches nur während der Programmblöcke eingeblendet wird.

Ein weiteres im Stand der Technik bekanntes Verfahren, das beispielsweise in der DE 298 24 075 U1 und der DE 198 07 765 A1 beschrieben ist und das dazu dient, aus dem laufenden Fernsehprogramm die Werbeblöcke zu eliminieren, verwendet eine empfangene Signalisierung des Benutzers über einen Datenübertragungsdienst (beispielsweise ein Funknetz oder DSL), um die Aufzeichnung eines Werbeblockes zu verhindern.

Der Anbieter beschäftigt hierfür einen oder mehrere Mitarbeiter, die zu Beginn jedes Werbeblockes manuell ein Signal erzeugen, um die Aufzeichnung zu unterbrechen, und zum Ende des Werbeblockes ein erneutes Signal zu erzeugen, um die Aufzeichnung fortzusetzen. Solche Systeme sind insbesondere im Bereich des Fernsehens im Heim-PC gebräuchlich, da dieser in der Regel bereits über einen Internetzugang verfügt. Insbesondere im Bereich des sog. "IP-TVs" (Internetfernsehens) ist daher mit verstärktem Einsatz solcher manueller Werbeblocker zu rechnen.

Aus der DE 601 05 975 T2 ist ein Werbeblocker bekannt, der auf der Basis einer Detektion senderspezifischer Logos arbeitet, während der Werbeblock solche Logos nicht zeigt. Dazu wird das digitalisierte Videosignal fortlaufend mittels Mustererkennungsalgorithmen analysiert und davon abhängig ein Blockanfangs- und ein Blockendsignal generiert, das die Steuerung der Stoppfunktion bei der Aufzeichnung bewirkt bzw. die Aufzeichnung wieder fortsetzt.

Aus der DE 44 23 748 C2 ist ein Verfahren zur gezielten Unterbrechung empfangbarer Fernsehprogramme und am Fernsehempfänger bei Auftreten unerwünschter Videosequenzen, z.B. Werbeblöcke mit definierten Anfangs- und Endbildfolgen, bekannt, bei denen zur Unterdrückung der Webesendung die digitalisierten Videobilder mit senderspezifischen Bildern verglichen werden. Auch hierdurch werden Anfangsund Endmarkierungen für die Werbeblöcke ermittelt und das Aufzeichnungsgerät entsprechend gesteuert.

Aus der DE 198 46 249 C2 ist ein Werbeblocker bekannt, bei dem Videosequenzen miteinander verglichen werden, die empfangen und zwischengespeichert werden.

Aus der DE 197 57 385 C2 ist eine Werbeblockerkennungseinrichtung bekannt, bei der eine Vergleichseinrichtung zum Gewinnen eines "Werbeblock läuft"-Signals und eines "Werbeblock läuft nicht"-Signals bezüglich eines empfangenen Signals der Unterhaltungselektronik eines in einem Zwischenspeicher temporär gespeicherten Signalabschnittes vorbestimmter, variabel einstellbarer Länge mit bestimmten, mit in einem Datenbanksystem gespeicherten Informationen vergleicht. Die Informationen werden separat nach Tonsequenzen und Bildsequenzen gespeichert und die Vergleichseinrichtung veranlasst, parallel einen Vergleich der Tonsequenzen und Bildsequenzen durchzuführen. In Abhängigkeit von einem Vergleich der gewichteten Summe wird ein "Werbeblock läuft nicht"-Signal oder ein "Werbeblock läuft"-Signal generiert.

Des Weiteren können die Programmanbieter, gleich ob deren Programmbeiträge über Satellit, terrestrisch, über Kabel oder im Internet gesendet werden, die Werbeblöcke mit Anfangs- und Endsignalen versehen. Dies würde allerdings dazu führen, dass die Endgerätehersteller, die den Empfang der gewünschten Beiträge ermöglichen, das Empfangsgerät derart arbeiten lassen, dass die durch die Blockmarkierungen vorgegebenen Werbeblöcke nicht mit aufgezeichnet werden. Im Falle solcher Signale ist eine Werbeblockerkennung, wie zuvor beschrieben, praktisch nicht notwendig. Aus diesem Grunde haben die Programmanbieter davon Abstand genommen, diese Informationen mit zu übertragen.

Vom klassischen Kino ist es bekannt, dass den Spielfilmen Werbeblöcke im Vorspann vorangesetzt werden. Beispielsweise werden in einem Vorspann diverse Produkte und/oder Dienstleistungen in einem dafür erstellten Film angeboten. Wenn Werbung in einem Vorspann zu einem Film dargestellt wird, so wird dies nicht als besonders unangenehm empfunden. Wenn hingegen Werbung während eines Filmes blockweise eingefügt wird, wird dies als sehr störend und lästig empfunden, da der Betrachter die Anschlussszenen nach der Unterbrechung erst gedanklich zuordnen muss.

Ausgehend von diesem Stand der Technik liegt der vorliegenden Erfindung die Aufgabe zugrunde, ein gattungsgemäßes Verfahren so weiter zu bilden, dass den berechtigten Interessen jener Programmanbieter, die sich ausschließlich oder fast ausschließlich durch Werbeeinnahmen finanzieren, Rechnung getragen und vermieden wird, dass die Werbung durch Werbeblockerkennung und Unterdrückung bei der Aufzeichnung und/oder Wiedergabe durch Überspringen von Werbeblöcken nicht wiedergegeben wird.

Gelöst wird die Aufgabe durch das im Anspruch 1 angegebene Verfahren, dass dadurch gekennzeichnet ist, dass das Speichergerät oder Audio- und/oder Videoempfangsgerät anhand der Verwaltungsdaten oder anhand von Blockmarkierungen feststellt, ob die AV-Daten unerwünschte Beiträge enthalten, die bei der Aufzeichnung nicht unterdrückt oder bei der Aufzeichnung oder Wiedergabe nicht übersprungen werden dürfen, dass die jeweiligen unerwünschten Beiträge in einem Vorspann zu den gewünschten Beiträgen zusammengefasst abgespeichert werden oder in dem Vorspann Zeiger auf solche unerwünschten Beiträge abgespeichert werden, die auf solche unerwünschten Beiträge zugreifen und sicherstellen, dass in einer definierten oder wahlfreien Zuordnung die unerwünschten Beiträge in einem Vorspann zu den gewünschten AV-Daten abgespielt werden, und dass das Wiedergabegerät während der Wiedergabe des Vorspanns durch eine Übersprungfunktion nicht ansteuerbar ist.

Das erfindungsgemäße Verfahren ist grundsätzlich in Verbindung mit allen Audio- und Videodaten, die empfangen werden, anwendbar, gleich ob diese via Satellit, über terrestrische Sender, über Kabelnetze oder über Internetnetze, über D2- oder UMTS-Netze oder andere Nachrichtennetze übertragen werden. Die Erfindung ist ferner auch dann anwendbar, wenn Übertragungsblöcke der unerwünschten Beiträge keine Anfangs- und Endsignalisierung aufweisen oder keine Blockmarkierungen mit übertragen werden. In solchen Fällen kommen zur Identifizierung der gewünschten und unerwünschten Beiträge klassische Verfahren, wie sie eingangs beschrieben worden sind, zur Anwendung, um die Blocklängen zu definieren. Dies kann einmal **dadurch geschehen, dass** festgestellt wird, ob ein Senderlogo in einem gewünschten Beitrag enthalten ist oder in einem unerwünschten Beitrag kein Senderlogo. Dies kann auch durch Bildsequenzvergleiche vor dem Einschub eines unerwünschten Beitrags in eine Sendung oder am Ende des Einschubes erfolgen. Die Auswertung solcher Bildsequenzen oder einzelner Bilder kann auf manigfaltige Weise erfolgen, beispielsweise durch Auswertung von Helligkeitssprüngen, durch Kontrastsprünge oder durch Feststellen von Auflösungsunterschieden. Es ist aber auch eine Detektion anhand der Tonsignale möglich, da bekanntlich Werbesendungen in der Regel mit einem höheren Hub ausgestrahlt werden. Auch Tonsignallücken im ms-Bereich lassen sich auswerten. Ferner sind Kombinationen der vorgenannten Vorgehensweisen bei der Detektion möglich, um die Trefferquote auf nahezu 100 Prozent anzuheben. Am einfachsten lässt sich jedoch eine Steuerung bewirken, wenn Anfangsund Endsignale mit übertragen werden, die extrahiert werden können, um entsprechend die Steuerung zu bewirken. Auch kann beispielsweise ein zugeordnetes Verwaltungsdatum als Signal herangezogen werden, das zum Beginn eines Werbeblockes und zum Ende wiederholt mit übertragen wird. Ferner können in einem Vorspann eines Beitrages Zeitsignale gesendet werden, die signalisieren, zu welchem Zeitpunkt solche Blöcke in einen laufenden Programmbeitrag eingefügt werden. Das Verfahren ist also auf alle Übertragungs- und Ausgestaltungsmöglichkeiten anwendbar.

Wie im klassischen Kino wird durch die Erfindung erreicht, dass die Werbeblöcke insgesamt als Vorspann vor der Wiedergabe einer Aufzeichnung dargestellt werden und danach in ununterbrochener Reihenfolge die Blöcke des gewünschten Programmbeitrages. Selbstverständlich lässt sich die gleiche Technologie auch auf Tonrundfunksendungen - gleich von welcher Quelle diese bezogen oder in welcher Art und Weise diese verarbeitet werden - anwenden, da auch in laufenden Tonsendungen beispielsweise Werbeblöcke eingefügt werden. Hier kann man selbstverständlich bei der Ermittlung eines Blockanfangs und Blockendes des unerwünschten Programmbeitrages keine Bildvergleiche anstellen, wohl aber die Signale akustisch analysieren und daraus entsprechende Anfangs- und Endsignale generieren. Sofern besitzt die Erfindung auch für reine Audioempfänger gleiche Bedeutung.

Grundsätzlich lässt sich das Verfahren während des Empfangs einer laufenden Sendung anwenden. Nach dem Feststellen unerwünschter Programmbeiträge werden diese in einem separaten Speicher oder in einem Speicherbereich vom Speichergerät als Vorspann zu den gewünschten Beiträgen abgespeichert, und zwar primär in der Reihenfolge, in der sie empfangen werden. Es können aber nur Zeiger abgelegt werden, die im Falle der Wiedergabe das Steuergerät veranlassen, die Speicherbereiche zu überspringen, in denen die unerwünschten Beiträge abgespeichert sind. Die Vorspannzuordnung kann aber auch erst nach einer Aufzeichnung einer Sendung bei der Wiedergabe realisiert werden. In diesem Fall wird der Rechner veranlasst, den Vorspann erst dann zu ermitteln und die entsprechenden Verzweigungen bzw. Umspeicherungen vorzunehmen, damit bei der Wiedergabe zunächst die Werbeblöcke wiedergegeben werden und dann der gewünschte Programmbeitrag.

Selbstverständlich könnten auch in einem Nachspann zu den gewünschten Programmbeitragsblöcken die unerwünschten Blöcke, wie Werbeblöcke, abgespeichert bzw. dargestellt werden. In diesem Fall müsste dafür Sorge getragen werden, dass dann, wenn diese Blöcke abgespielt werden, das Gerät nicht ausgeschaltet werden kann. Auch ist eine wahlfreie Einspeicherung programmierbar, z.B. kann nach 20 Minuten Wiedergabe vom gewünschten Beitrag der Werbeblock eingespielt werden. Diese Vorprogrammierung ist z.B. aus einem Einstellmenue auswählbar. Andererseits sollte, wenn die unerwünschten Programmbeiträge in einem Vorspann gespeichert sind, diese auch im Vorspann wiedergegeben werden.

Die für die Abspeicherung und/oder Wiedergabe erforderlichen Daten können sowohl in dem Speichergerät als auch in dem Audio- und/oder Videoempfangsgerät oder auch in dem Wiedergebegerät ermittelt werden. Wenn je drei Geräte hier einzeln angesprochen sind, so schließt das nicht aus, dass es sich um ein und dasselbe Kombinations-Empfangsgerät handeln kann, z.B. ein Satellitenreceiver mit integriertem Festplattenspeicher oder ein Fernsehempfangsgerät mit integriertem Festplattenspeicher und Empfängerschaltung für diverse Quellen, so dass über ein und dasselbe Gerät sowohl empfangen, gespeichert und auch wiedergegeben werden kann. Es kann sich aber auch um Gerätekombinationen aus einem reinen Speichergerät handeln, z.B. einen über eine USB-Schnittstelle angeschlossenen Festplattenspeicher, verbunden mit einem Audio- und/oder Videoempfänger und dieser wiederum mit einem Monitor oder einem aktiven Lautsprecher, um akustische Signale wiedergeben zu können. Es sind also in Verbindung mit der Erfindung alle Kombinationen möglich.

Ein Beispiel mag die Arbeitsweise des Verfahrens verdeutlichen. Die von einem Audio- und/oder Videoempfangsgerät aber auch von einem Speichergerät ausgelesenen Programmbeiträge, beispielsweise ein Spielfilm, werden daraufhin untersucht, ob in dem Datenstrom Verwaltungsdaten enthalten sind, die definieren, dass die unerwünschten Beiträge nicht gelöscht werden dürfen. Stellt das empfangende Gerät diese fest und geben die Verwaltungsdaten zudem die Markierungen vor, z.B. zeitliche Markierungen oder auch Hinweise auf unmittelbar eingebundene Markierungssignale für den Anfang und das Ende eines solchen Blockes eines unerwünschten Programmbeitrags, so legt das System entweder in einem Speicherbereich des Speichers die entsprechenden, auf die einzelnen Blöcke unerwünschter Beiträge bezogenen Daten ab, die den Anfang und das Ende markieren, oder es werden Zeiger abgelegt, die bei der Wiedergabe direkt auf den Beginn eines unerwünschten Beitrages zugreifen und diesen zunächst abspielen und in Folge weitere, in demselben gewünschten Programmbeitrag enthaltene unerwünschter Programmbeiträge, oder aber die Blöcke werden gänzlich aus dem Serienstrom herausgenommen und in einen separaten Speicher oder Speicherbereich abgelegt, der bei Aufrufen der Wiedergabefunktion zunächst immer ausgelesen wird, wobei die Daten dann mit dem Wiedergabegerät oder Wiedergabeteil des Kombinationsgerätes visuell und/oder akustisch wiedergegeben werden.

Enthält der Datenstrom Blockmarkierungen, die den Anfang und das Ende eines nicht gewünschten Programmbeitrags markieren und liegen Verwaltungsdaten vor, die ein Überspringen oder ein Löschen dieses nicht gewünschten Programmbeitrags verhindern sollen, so kann das System direkt auf die Blockmarkierungen zugreifen und diese nutzen, um die unerwünschten Programmbeiträge in einem Vorspann zum gewünschten Programmbeitrag abspielen zu können. Selbstverständlich können die einzelnen Blöcke auch untereinander vertauscht werden, also ein wahlfreier Zugriff ermöglicht werden. Dieser Zugriff sollte auch nachträglich bei der Wiedergabe möglich sein, um interessante Werbebeiträge wiederholt ansehen zu können. In jedem Fall sorgt das System dafür, dass bei Wiedergabeaufforderung an das Gerät, z.B. mittels Fernbedienungsgeber, einen bestimmten gewünschten Programmbeitrag wiederzugeben, zunächst immer der Vorspann, also die zusammengestellten Werbeblöcke wiedergegeben werden. Das Gerät ist aber so gesichert, dass ein Überspringen der Werbeblöcke nicht möglich ist und beispielsweise bei einer Unterbrechung entweder wieder von vorn angefangen wird oder bei der Fortsetzung ab der Unterbrechung der Vorspann weiter abgespielt wird. Erst wenn der Vorspann völlig abgespielt ist, wird der gewünschte Programmbeitrag ausgelesen und z.B. auf dem Display des Gerätes dargestellt bzw. die Audiosignale über den Audioverstärker und den Lautsprecher wiedergegeben. Derselbe Ablauf ist auch möglich, wenn es sich bei den empfangenen Sendungen um reine Tonrundfunkbeiträge handelt.

Vorteilhafte Ausgestaltungen des erfindungsgemäßen Verfahrens sind in den Unteransprüchen 2 bis 6 und in einer Vorrichtung zur Durchführung des Verfahrens im Anspruch 7 angegeben.

Es hat sich gezeigt, dass es auch zweckmäßig ist, die Länge des Vorspannes insgesamt anzuzeigen oder auch die Zeiten bzw. Längen der unerwünschten Beiträge. Dies kann in einem Darstellungsfenster oder in einer Übersichtsseite erfolgen. Es kann in einem Darstellungsfenster in einem Display daneben auch die Restlaufzeit zusätzlich oder nur diese angezeigt werden, beispielsweise 10 min, um dem Benutzer zu signalisieren, ab wann der gewünschte Programmbeitrag folgt. Solche Vorhersagen können aber auch über eine Vocoder mit angeschlossenem Lautsprecher mittels synthetischer Sprache wiedergegeben werden.

In weiterer Ausgestaltung des Verfahrens kann auch vorgesehen sein, dass bei wiederholter Wiedergabe eines Programmbeitrags der Vorspann z.B. ab der dritten Wiedergabe nicht mehr angezeigt bzw. ausgelesen wird. Dies hängt von dem jeweiligen Rechtemanagement des Programmbeitrags ab.

Wenn die Markierungen des Anfangs und des Endes eines Blockes erst durch Bildvergleiche oder sonstige aufwendige Rechneroperation durchgeführt werden, kann es vorkommen, dass Teile des unerwünschten Werbeblockes bei der Darstellung des gewünschten Programmbeitrages noch mit angezeigt werden. Um dies zu verhindern, kann auch dafür Sorge getragen werden, dass der Beginn des Blockes des Werbebeitrags vorverlegt wird, so dass, wenn überhaupt etwas abgeschnitten wird, ein geringfügiger Teil des gewünschten Programmbeitrags mit den Werbeblöcken wiedergegeben wird. Dies wird aber nicht als störend empfunden, weil gewöhnlich nach einem Werbebeitrag die zuletzt wiedergegebene Szene des gewünschten Programmbeitrags mindestens teilweise wiederholt wird.

Das Verfahren kann in einer Gerätekombination oder in einem kombinierten Gerät realisiert werden, das folgende Komponenten aufweist:
- ein Audio- und/oder Videoempfangsgerät zum Empfang von AV-Daten und diesen zugeordneten Verwaltungsdaten (VD),
- einen Datentrenner zum Abtrennen der Verwaltungsdaten aus den AV-Daten,
- ein integriertes oder angeschlossenes Speichergerät mit einem integrierten oder ansteckbaren Datenträger zum Speichern der AV-Daten,
- eine Mikroprozessorsteuereinheit zur Steuerung des Aufzeichnungsprozesses und zur Umspeicherung der in den AV-Daten enthaltenen Daten unerwünschter Beiträge in einen gesonderten Speicherbereich oder Zuordnen von Zeigern und Abspeichern derselben in einem gesonderten Speicherbereich für jeden einzelnen unerwünschten Beitrag und zum Auslesen der Zeiger zum Wiedergeben der einzelnen unerwünschten Beiträge in fortlaufender oder in einer vorprogrammierten ausgewählten Reihenfolge aus einem Programmbeitrag, und
- ein Wiedergabegerät, integriert in die vorgenannte Gerätekombination oder in ein separates kombinierbares Gerät mit einer Steuerung des Zugriffs auf den Datenspeicher, wobei während der Wiedergabe zunächst der Vorspann oder die dem Vorspann durch Zeigerverzweigungen zugeordneten unerwünschten Beiträge wiedergegeben werden,
- welches Wiedergabegerät eine Steuerfunktion beinhaltet, die ein Überspringen der im Vorspann enthaltenen oder dem Vorspann zugeordneten Daten blockiert.

## Patentansprüche

1. Verfahren zur Speicherung von empfangenen Audio-und/oder Videodaten mittels eines Speichergerätes auf einem Datenträger, wobei das Audio- und/oder Videoempfangsgerät einen digitalen Strom von AV-Daten und zugeordneten Verwaltungsdaten (VD) empfängt und die AV-Daten nicht zu dem gewünschten Programmbeitrag gehörende, blockweise eingefügte unerwünschte Beiträge enthalten, die Restriktionen unterliegen, und die Aufzeichnung und/oder die aufgezeichneten AV-Daten und/oder diese vor der Aufzeichnung unter Beachtung von den durch die Verwaltungsdaten (VD) definierten Restriktionen verwaltet werden, welche gespeicherten AV-Daten mit einem Wiedergabegerät visuell und/oder akustisch wahlfrei wiedergebbar sind, **dadurch gekennzeichnet, dass** das Speichergerät oder Audio-und/oder Videoempfangsgerät anhand der Verwaltungsdaten oder anhand von Blockmarkierungen feststellt, ob die AV-Daten unerwünschte Beiträge enthalten, die bei der Aufzeichnung nicht unterdrückt oder bei der Aufzeichnung oder Wiedergabe nicht übersprungen werden dürfen, dass die jeweiligen unerwünschten Beiträge in einem Vorspann zu den gewünschten Beiträgen zusammengefasst abgespeichert werden oder in einem Vorspann Zeiger abgespeichert werden, die auf solche unerwünschte Beiträge zugreifen und sicherstellen, dass in einer definierten oder wahlfreien Reihenfolge die unerwünschten Beiträge in einem Vorspann zu den gewünschten AV-Daten abgespielt werden, und dass das Wiedergabegerät während der Wiedergabe des Vorspanns durch eine Übersprungfunktion nicht ansteuerbar ist.

2. Verfahren nach Anspruch 1, **dadurch gekennzeichnet, dass** die Zeiten der unerwünschten Beiträge erfasst und einzeln und/oder in ihrer Gesamtheit in einer Übersichtsseite oder einer Displayeinblendung vor dem Abspielen des Vorspanns visuell auf einem Display angezeigt werden oder mittels Vocoder und Lautsprecher signalisiert werden.

3. Verfahren nach Anspruch 2, **dadurch gekennzeichnet, dass** während des Abspielens des Vorspanns die Restzeit und/oder der Beginn des Programmbeitrags angezeigt werden.

4. Verfahren nach Anspruch 2, **dadurch gekennzeichnet, dass** bei mehreren Programmbeitragsaufzeichnungen ein gemeinsamer Vorspann erstellt wird, der bei der fortlaufenden Wiedergabe dem ersten Programmbeitrag zugeordnet wird und/oder bei wiederholter Auslösung der Wiedergabe den einzelnen Programmbeiträgen entsprechend der Ursprungszuordnung zugeordnet und wiedergegeben wird.

5. Verfahren nach einem der vorhergehenden Ansprüche, **dadurch gekennzeichnet, dass** bei wiederholter Wiedergabe eines Programmbeitrages der Vorspann ab einer definierten Anzahl der Wiedergaben automatisch unterdrückt bzw. deaktiviert wird, wenn die Wiedergabe über dasselbe Gerät erfolgt.

6. Verfahren nach Anspruch 5, **dadurch gekennzeichnet, dass** bei Generierung von Blockmarkierungen mittels Detektion von Bildinhalten die unerwünschten Beiträge bereits mindestens für die Dauer der Detektierung zu Beginn zeitlich vorher in den Vorspann übernommen werden oder die Markierung um die Prüfzeit vorverlegt wird und dass am Ende des Blockes des unerwünschten Beitrages dieser um die Rechnerzeit vorverlegt wird.

7. Gerät oder Gerätekombination zur Durchführung des Verfahrens nach Anspruch 1, **gekennzeichnet durch**
- ein Audio- und/oder Videoempfangsgerät zum Empfang von AV-Daten und diesen zugeordneten Verwaltungsdaten (VD),
- einen Datentrenner zum Abtrennen der Verwaltungsdaten aus den AV-Daten,
- ein integriertes oder angeschlossenes Speichergerät mit einem integrierten oder ansteckbaren Datenträger zum Speichern der AV-Daten,
- eine Mikroprozessorsteuereinheit zur Steuerung des Aufzeichnungsprozesses und zur Umspeicherung der in den AV-Daten enthaltenen Daten unerwünschter Beiträge in einen gesonderten Speicherbereich oder Zuordnen von Zeigern und Abspeichern derselben in einem gesonderten Speicherbereich für jeden einzelnen unerwünschten Beitrag und zum Auslesen der Zeiger zum Wiedergeben der einzelnen unerwünschten Beiträge in fortlaufender oder in einer vorprogrammierten ausgewählten Reihenfolge aus einem Programmbeitrag, und
- ein Wiedergabegerät, integriert in die vorgenannte Gerätekombination oder in ein separates kombinierbares Gerät mit einer Steuerung des Zugriffs auf den Datenspeicher, wobei während der Wiedergabe zunächst der Vorspann oder die dem Vorspann **durch** Zeigerverzweigungen zugeordneten unerwünschten Beiträge wiedergegeben werden,
- welches Wiedergabegerät eine Steuerfunktion beinhaltet, die ein Überspringen der im Vorspann enthaltenen oder dem Vorspann zugeordneten Daten blockiert.
